# EUROPEAN PATENT APPLICATION

(11) **EP 3 666 675 A1**
(43) Date of publication of application: **17.06.2020**
(21) Application number: 18843964.0
(22) Date of filing: 18.07.2018
(51) Int. Cl.: B65D 1/02, B65D 65/42

(54) **BLOW-MOULDED CONTAINER USED WITH OIL FILM FORMED ON INNER SURFACE**

(30) Priority: 10.08.2017 JP 2017154997
(71) Applicant: Toyo Seikan Co., Ltd., Tokyo 141-8640 (JP)
(72) Inventor: AKUTSU, Yosuke, Yokohama-shi Kanagawa 230-0001 (JP); NYUU, Keisuke, Yokohama-shi Kanagawa 230-0001 (JP); KOMATSU, Ikuo, Yokohama-shi Kanagawa 230-0001 (JP)
(74) Representative: J A Kemp LLP
(86) International application number: PCT/JP2018/026905
(87) International publication number: WO 2019/031171

(57) **Abstract**

The present invention aims to provide a blow-formed container having an inner surface coated with an oil-based liquid so that an oil film can be formed uniformly on the entire inner surface of the container, thereby preventing or reducing effectively adhesion or residue of a content onto the inside of the container. The blow-formed container is formed of an olefin resin and has an inner surface 1a having oil droplet dispersion of not less than 5.0 mm when the oil droplet dispersion is defined as a length of an oil droplet of medium-chain triglyceride used as a reference oil retained at 23°C and dropped by 0.8 µL onto the inner surface.

## Description

### Technical Field:

The present invention relates to a blow-formed container provided with an oil film on its inner surface so as to be made ready for use.

### Background Art:

Since plastics can be shaped easily in a simple manner for various embodiments, they are used widely in various fields . In particular, olefin resins such as low-density polyethylene are used to form an inner wall surface of a container like a directly blow-formed bottle. Because of its squeezing property and squeezing-out property, such a directly-blow shaped bottle is used widely for containers to contain particularly viscous fluid substances like ketchup and mayonnaise.

Meanwhile, a container to contain a viscous fluid substance is required to have an inner surface that exhibits a high lubricity to contents, so that the contents can be rapidly discharged and used up without residing within the container.

In a conventional technique, the lubricity is imparted by blending an additive such as a lubricant in the resin used to form the inner surface of the container. In various techniques proposed recently, a liquid film is formed on the substrate surface of resin so as to improve the surface properties such as lubricity to a viscous substance (see Patent document 1 for instance).

The techniques are currently attracting attention since they can improve remarkably the lubricity in comparison with a technique of blending an additive like a lubricant in a resin to form the substrate surface.

In this technique of improving the surface properties by forming a liquid film on the surface, it is required to retain stably the liquid film on the surface. For this purpose, in the aforementioned Patent document 1, fine ruggedness is formed on the surface.

The fine ruggedness can be formed usually by spraying, before forming a liquid film, a substrate surface with a coating liquid like an ethanol solution in which inorganic fine particles are dispersed, and then, by drying the surface. Alternatively, a resin composition blended with inorganic fine particles is used as the resin for forming the substrate surface. The resin composition is subjected to a shaping process like stretching, thereby producing a substrate having a predetermined shape (e.g., a container) (see Patent document 1 or Patent document 2, for instance). According to the techniques, a predetermined ruggedness may be formed on a substrate surface in accordance with the particle size and blend amount of the inorganic fine particles blended in the resin forming the substrate surface.

However, when the liquid film is formed to improve lubricity to the viscous substance as mentioned above, the liquid film on the surface may sometimes be formed unevenly to cause a failure that the viscous substance may adhere to a part of the substrate surface. In particular, in a case of forming a film of an oil-based liquid (oil film) on the substrate surface to improve the lubricity to the viscous hydrous substance, the problem is more likely to occur.

### Prior Art Documents:

### Patent Documents:

Patent Document 1: JP 5971337
Patent Document 2: JP-A-2015-227012

### Summary of the Invention:

### Problems to be solved by the invention:

Therefore, an object of the present invention is to provide a blow-formed container that can exhibit stable lubricity to the content and effectively prevent or reduce adhesion or residue of the content onto the inner surface of the container. The container can be produced by coating an oil-based liquid on the inner surface so as to form uniformly an oil film on the entire inner surface of the container before filling the container with the content.

### Means for solving the problems:

The present inventors repeated experiments and reviews on the blow-formed container to be provided with an oil film on its inner surface in use. A blow-formed container has an inner surface of an olefin resin formed to have a certain level of smoothness, without adding a lubricant to the olefin resin. The present inventors found that an oil-based liquid in the container spreads wet to form a uniform oil film on the entire inner surface, thereby arriving at the present invention.

The present invention relates to a blow-formed container having an inner surface of an olefin resin. The inner surface has an oil droplet dispersion of not less than 5.0 mm where the oil droplet dispersion is defined as the length of an oil droplet of medium-chain triglyceride used as a reference oil retained at 23°C and dropped by 0.8 µL onto the inner surface.

It is preferable in the blow-formed container of the present invention that:
(1) the oil droplet has a length/breadth ratio in a range of 1.000 to 1.010;
(2) the inner surface formed of the olefin resin includes a smooth surface having an arithmetic mean height Sa and a root mean square height Sq both of which are not more than 1.5 µm;
(3) an oil-based liquid is coated on the inner surface of the container prior to filling the container with a content;
(4) the oil film of the oil-based liquid formed on the inner surface has a thickness in a range of 0.5 to 30 g/m²; and
(5) the oil-based liquid is an edible oil.

### Effects of the invention:

At least the inner surface of the blow-formed container of the present invention is formed of the olefin resin. The container is characterized in that the oil droplet dispersion (length of oil droplet) measured by using the aforementioned reference oil is not less than 5.0 mm. Namely, when an oil-based liquid (e.g., edible oil) is coated on the inner surface of the container exhibiting the oil droplet dispersion, the oil-based liquid rapidly spreads wet, thereby forming an oil film uniformly on the entire inner surface of the container. In particular, a thin oil film can be formed uniformly by coating a small amount of oil-based liquid, and this can avoid effectively variations in thickness caused by the flow of the oil-based liquid that forms the oil film. As a result, the lubricity imparted by the oil film to the content in the container can be improved stably.

Therefore, the blow-formed container of the present invention can be applied preferably for containing viscous hydrous substances such as ketchup, mayonnaise, and dressing.

### Brief Description of the Drawings:

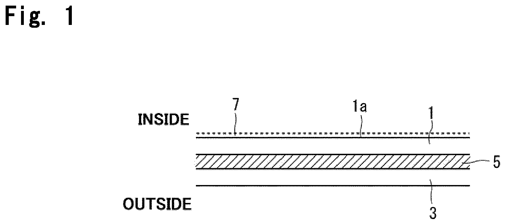

[Fig. 1]: a schematic side cross-sectional view showing a preferred layer structure of container wall of a blow-formed container of the present invention, in a state where an oil film is provided on its inner surface.

### Mode for Carrying Out the Invention:

The blow-formed container of the present invention as shown in Fig. 1 has an inner layer 1 that forms the inner surface and an outer layer 3 that forms the outer surface, and an intermediate layer 5 is provided between the inner layer 1 and the outer layer 3. The blow-formed container having this layer structure is provided with an oil film 7 on its inner surface 1a to enhance lubricity (dischargeability) to a hydrous substance, and the container filled with the hydrous substance is ready for use.

### <Inner layer 1>

In the aforementioned layer structure, the inner layer 1 of the present invention is formed of an olefin resin.

For this purpose, olefin resins that have been well known can be used. The examples include olefin polymers such as low-density polyethylene, linear chain low-density polyethylene, medium- or high- density polyethylene, polypropylene, poly1-butene, and poly4-methyl-1-pentene; and copolymer resins or blends of these olefins. Among them, the polyethylene having a density of not more than 0.930 g/cm³ is particularly preferred as it has excellent retention of the oil film 7 and flexibility, and also squeezing property to extrude the viscous content. Examples of the polyethylene are low-density polyethylene and linear chain low-density polyethylene.

In the present invention, the inner surface 1a of the container, which is formed of the olefin resin, is prepared so that the oil droplet dispersion will be 5.0 mm or more. Here, the oil droplet dispersion is measured using medium-chain triglyceride as the reference oil. The reference oil kept at 23°C is dropped by 0.8 µL onto the inner surface 1a. As illustrated in the following Examples, this oil droplet dispersion can be calculated by dropping an oil droplet of the reference oil (0.8 µL) onto the container inner surface 1a, and by observing the size (length) of the oil droplet by use of a digital microscope 60 seconds after the dropping. A greater value indicates a higher wettability to the oil-based liquid.

In other words, the inner surface 1a of the blow-formed container of the present invention exhibits excellent wettability to the oil-based liquid. This makes it possible to form an extremely thin oil film 7 on the entire inner surface 1a of the container uniformly by spraying a small amount of the oil-based liquid.

The fatty acid in the medium-chain triglyceride used as the reference oil in the measurement has a carbon number of 8 to 10. In particular, the ratio of a fatty acid having a carbon number of 8 to a fatty acid having a carbon number of 10 may be 60:40, 70:30, 75:25, 85:15 and 100:0. The medium-chain triglyceride selected therefrom has a viscosity in a range of 20 to 40 mPa·s at 23°C. This range can be employed suitably for measurement of the aforementioned oil droplet dispersion, namely, it enables measurement without substantial variations. In Examples below, measurement of oil droplet dispersion is conducted using medium-chain triglyceride having a viscosity of 33.8 mPa·s at 23°C.

In the present invention, the measurement in the oil droplet dispersion test is conducted as follows. It is particularly preferable in the test that the length/breadth ratio of the oil droplet is within the range of 1.000 to 1.010. The length/breadth ratio within this range indicates that the oil droplet spreads wet in a shape of almost an exact circle. As a result, the best wettability can be obtained when the oil droplet dispersion is within the range and at the same time the length/breadth ratio is within the range.

The lubricity may be affected even by an extremely small defect (micro-level oil cissing/crawling). For improving the lubricity to the content in the container by using the oil film, it is extremely important from the technical viewpoint to prevent the micro-level oil cissing/crawling. Since the micro-level defects in wetting are prevented effectively in the present invention, the length/breadth ratio of the oil droplet is controlled to be within the range in the oil droplet dispersion test.

In the present invention, imparting the oil droplet dispersion as mentioned above indicates that a bleeding type additive like a lubricant is not blended in the olefin resin to form the inner layer 1. Usually, thermoplastic resins represented by olefin resins contain a lubricant blended to impart demoldability. If the lubricant is bled on the inner surface 1a, it may repel the oil-based liquid coated on the inner surface 1a. As a result, the oil-based liquid cannot spread wet. The olefin resin may further contain inorganic oxide particles like silica blended for the purpose of increasing the amount, reinforcing, or making the inner surface 1a rugged. However, since the inorganic oxide particles tend to make the inner surface 1a rugged, it may cause micro-level defects in wettability of the oil-based liquid. In order to develop the oil droplet dispersion, the olefin resin is used to form the inner layer 1 without blending the inorganic oxide particles.

Alternatively, the oil-based liquid as mentioned below can be blended in advance in the inner layer in order to improve the oil droplet dispersion.

Furthermore, in order to impart the oil droplet dispersion, the inner surface 1a is required to have extreme smoothness. For instance, the inner surface 1a is required to have arithmetic mean height Sa and root mean square height Sq both of which are not more than 1.5 µm in measurement according to ISO25178-2:2012, and more preferably, the maximal surface roughness Rz is not more than 20 µm. Since the inner surface 1a is such a smooth surface, a small amount of oil-based liquid may spread wet widely to exhibit excellent oil droplet dispersion. From the viewpoint of preventing fall of the oil-based liquid, this inner surface 1a preferably might be roughened to have a great ruggedness. However, the oil-based liquid might be difficult to spread wet on the surface, thereby often causing problems such as variations in thickness or the like.

The procedures for forming the smooth surface will be described below.

In the blow-formed container of the present invention having the inner layer 1, the thickness of the inner layer 1 is preferably set not to exceed the required thickness as long as the properties such as flexibility and strength required for the container are satisfactory. Preferably, the thickness is not more than 200 µm, and particularly preferably in a range of about 40 to about 150 µm. A thickness of more than the range may cause problems. For instance, when an oil-based liquid is coated on the inner surface 1a of this inner layer 1, the amount of the oil-based liquid absorbed in the inner layer 1 (saturated absorption) is increased. This will increase the amount of the oil-based liquid necessary for forming the oil film 7 of a predetermined thickness, or increase the amount of the oil-based liquid to be absorbed in the inner layer 1, whereby the thickness of the oil film 7 will greatly vary over time.

### <Outer layer 3>

In the present invention, various thermoplastic resins to be used for formation of containers can be used as the resin to form the outer layer 3. For instance, various olefin resins and polyester resins represented by polyethylene terephthalate can be used. Among them, olefin resins are preferred from the viewpoint of imparting flexibility to the container body so as to be squeezed for discharging the viscous hydrous content. Most preferably, the outer layer 3 is formed of an ethylene resin similar to that of the inner layer, and particularly, low-density polyethylene (LDPE) having a density of not more than 0.930 g/cm³.

The outer layer 3 is not required to exhibit properties like oil droplet dispersion since no oil film is formed on the surface. Therefore, various bleeding additives can be blended in the outer layer 3, and a lubricant may be blended particularly preferably. Blending a lubricant will make it possible to effectively avoid disadvantages such as sticking of a container to another container or to the conveyance belt during transportation of formed containers.

Examples of the lubricants are described below. These lubricants may be blended in commercially available polyethylene or the like:
fatty acids such as stearic acid and lauric acid;
aliphatic amides such as stearamide, palmitamide, oleamide, erucamide, methylenebistearamide, ethylenebistearamide, ethylenebisdocosanamide, and ethylenebisoleamide;
fatty acid esters such as butyl stearate, hydrogenated castor oil, and ethylene glycol monostearate;
alcohols such as cetyl alcohol and stearyl alcohol; and
soap scums such as zinc stearate and calcium stearate.

The lubricant may be blended in an amount of about 0.01 to about 0.5 parts by mass per 100 parts by mass of resin to form the outer layer 3, for instance.

The thickness of the outer layer 3 is not required to be set strictly as long as the properties necessary for the container, such as flexibility, squeezing property or strength, can be imparted.

### <Intermediate layer 5>

The blow-formed container of the present invention preferably has a constitution as shown in Fig. 1 where an intermediate layer 5 is provided between the inner layer 1 and the outer layer 3. From the viewpoint of imparting the lubricity with respect to the content, the container may have a single layer structure consisting of only the inner layer 1 having the aforementioned inner surface 1a to exhibit the oil droplet dispersion. However, the blow-formed container having the single layer structure has a high oxygen permeability, and thus, it is unsatisfactory from the viewpoint of preventing oxidation degradation of the content. For this reason, it is preferable to provide the intermediate layer 5 of a resin other than the olefin resin, thereby preventing or reducing permeation of oxygen.

Representative examples of the intermediate layer 5 include a gas barrier resin layer and an oxygen-absorbing layer. Further, an adhesive layer for bonding these layers to the inner layer 1 and the outer layer 3 may be provided also as an intermediate layer. In addition, a regrind layer or the like that includes scraps like burr generated in the formation process can be provided as an intermediate layer. It is also possible to provide both the gas barrier resin layer and the oxygen-absorbing layer.

Examples of gas barrier resin used for forming the gas barrier resin layer include ethylene·vinyl alcohol copolymer (saponified ethylene·vinyl acetate copolymer), aromatic polyamide, and cyclic polyolefin. Among them, the ethylene·vinyl alcohol copolymer is most preferred since it is excellent in gas barrier property.

An example of usually preferred ethylene·vinyl alcohol copolymer is a saponified copolymer obtained by saponifying an ethylene·vinyl acetate copolymer containing 20 to 60 mol% and particularly in a range of 25 to 50 mol% of ethylene so that the saponification degree will be not lower than 96 mol%, and particularly not lower than 99 mol%.

It is also possible to use a blend of these gas barrier resins.

The aforementioned gas barrier resin layer is capable of preventing or reducing dispersion of the oil-based liquid that forms the oil film 7 on the inner surface 1a. The gas barrier resin layer is preferably used to effectively prevent transition of the oil-based liquid from the inner layer 1 to the outer layer 3 side, thereby stabilizing the oily film 7. The gas barrier resin layer has another advantage, namely, it can prevent or reduce transition of the lubricant blended in the outer layer 3 to the inner layer 1 side so as to keep the oil wettability of the inner surface 1a.

The oxygen-absorbing layer contains an oxidizable polymer to be oxidized as a result of reaction with oxygen.

A detailed description of the oxidizable polymer is omitted here because the polymer is well known and described in detail in JP 2002-240813A and the like. Representative examples thereof include: olefin resin having tertiary carbon atom (for instance, polypropylene, polybutene-1 or their copolymers), thermoplastic polyester or aliphatic polyamide; xylylene group-containing polyamide resin; and polymer containing ethylenically unsaturated group (for instance, polymers derived from polyenes such as butadiene).

In this oxygen-absorbing layer, usually a small amount of transition metal catalyst is blended to accelerate oxidation of the oxidizable polymer. Representative examples of the transition metal catalyst include inorganic, organic or complex salts of transition metals such as iron, cobalt and nickel.

An adhesive resin layer is used to improve the adhesion of the inner and outer layers 1, 3 to the gas barrier resin layer and the oxygen-absorbing layer. The adhesive resin layer is formed of a resin containing carbonyl group (>C=O) in the main chain or the side chain for instance, and the carbonyl group is contained in an amount of 1 to 100 meq, or in particular, 10 to 100 meq per 100 g of the resin. Specific examples of the resin include: olefin resins graft-modified with carboxylic acids such as maleic acid, itaconic acid, fumaric acid or their anhydrides, amides, esters, or the like; an ethylene-acrylic acid copolymer; an ion-crosslinked olefin copolymer; and an ethylene-vinyl acetate copolymer.

In the present invention, an olefin resin, in particular polyethylene to be used for forming the inner layer 1 or the outer layer 3 can be blended in the aforementioned gas barrier resin layer or the oxygen-absorbing layer, in particular, the gas barrier resin layer, as long as the properties of these layers are not impaired. By blending the olefin resin, it is possible to improve the adhesion between these layers to the inner and outer layers 1 and 3 without interposing an adhesive resin layer. The constitution including no adhesive can be provided at a low cost.

The respective layers that may form the aforementioned intermediate layer 5 are determined to have a thickness to sufficiently exhibit their own functions.

Examples of preferred layer constitution of the blow-formed container of the present invention, in which the aforementioned intermediate layer 5 is included, are indicated below.

In the following layer constitution, LDPE indicates low-density polyethylene having a density of not more than 0.929 g/cm³, RG indicates a regrind layer prepared by blending virgin LDPE in scrap of burr or the like generated in the formation process, GS indicates a gas barrier resin layer, and O2AB indicates an oxygen-absorbing layer. (Outside) LDPE/GS/O2AB/GS/LDPE (Inside) (Outside) LDPE/GS/O2AB/RG/GS/LDPE (Inside)

In the layer constitution described above, it is possible to provide the aforementioned adhesive resin layer on the interface of each layer, although the adhesive resin layers can be omitted as mentioned above in a case where LDPE is blended in the GS layer or the O2AB layer.

### <Production of blow-formed container>

The blow-formed container of the present invention, which has the aforementioned layer constitution and comprises the inner surface 1a having a predetermined oil droplet dispersion, can be produced by a well-known blow-formation method. A process that can be employed for producing the container includes: preparing a test tube shape preform by injection of a resin or resin composition to form each layer, and subjecting this preform to a secondary stretch blow formation. An alternative method is direct blow formation, where a tubular parison is formed from a predetermined resin or resin composition by melt-extrusion, the parison is closed at one end by pinch-off, and then, a fluid like air is blown into the parison to shape a container (bottle).

These methods for producing a blow-formed container have been well known. The direct blow formation is particularly preferred in production of a container since the method can impart the container with flexibility and squeezing property for discharging viscous contents.

In a case of producing the blow-formed container by direct blow formation, it is preferable that the surface of a core mold is not subjected to a treatment for repelling the molted resin or a treatment with a highly slidable resin, because the surface of the core mold will be brought into contact with the part of the inner layer 1 that makes the inner surface 1a during the melt extrusion to form the tubular parison. The surface treatment is conducted usually by coating a heat-resistant fluororesin on the mold surface, though the present invention is not limited to the example.

In a biaxial stretch blow formation or the like, the preform to be blown is formed by injection. In this case, the inner surface of the preform to make the inner surface 1a of the container is stretch-blown and shaped at a temperature not lower than the glass transition point and lower than the melting point, and thus, highly smooth surface can be obtained. On the other hand, in direct blow formation, the inner surface of the tubular parison to make the container's inner surface 1a is blown in the molten state and shaped. As a result, the inner surface is considerably affected by the surface roughness of the molten parison, and thus, it is difficult to make the inner surface 1a as a surface having predetermined smoothness. However, the tubular parison is formed by melt extruding while keeping in contact with the core mold that has been surface-treated so that the part to make the inner surface 1a will repel a resin. Therefore, it is possible to form the smooth inner surface 1a and to set the target oil droplet dispersion and the target length/breadth ratio of the oil droplets within the predetermined ranges.

The thus blow-formed container is usually sold directly to a content vendor. The content vendor sprays an oil-based liquid on the inner surface 1a of the container so as to form an oil film 7 on the inner surface 1a. After that, the container is filled with a content, a cap is attached thereto for making the container be commercially available.

That is, in the blow-formed container of the present invention, the inner surface 1a exhibits high oil droplet dispersion, so that the sprayed oil droplets widely spreads wet. Therefore, with a small amount of oil-based liquid, a uniform and thin oil film 7 is formed on the entire inner surface 1a of the container, and retained stably. For instance, the thickness of the oil film 7 (the amount of the oil-based liquid) present on the inner surface 1a is maintained in a range of 0.1 to 30 g/m², or even thinner in a range of 0.5 to 10 g/m². Usually, when the container is held upright for a long time, a disadvantage may occur, namely, the oil-based liquid may fall down to the bottom and the oil film 7 on the body may disappear. However, since the amount of the oil-based liquid is extremely small in this case, the disadvantage can be prevented effectively. Furthermore, even when the container is inverted to discharge the content, the oil-based liquid present on the bottom of the container may be effectively prevented from dripping so that the oil film 7 can be retained. This can serve to prevent or reduce effectively another disadvantage that the content adheres and resides onto the bottom of the container.

Needless to note, the oil-based liquid is required to be a non-volatile liquid having a low vapor pressure under atmospheric pressure, for instance, a high boiling point liquid having a boiling point of not lower than 200°C, since a volatile liquid would easily evaporate and disappear over time, which would make it difficult to maintain the oil film 7.

Various specific examples of the oil-based liquid can be presented as long as the liquid has a high boiling point as mentioned above. In particular, when the oil-based liquid has a surface tension considerably different from that of a viscous hydrous substance to which the oil-based liquid is to keep its lubricity, the oil-based liquid has a high wettability and can be used suitably in the present invention.

For instance, it is preferable to use an oil-based liquid having a surface tension in a range of 10 to 40 mN/m, in particular in a range of 16 to 35 mN/m. Representative examples of the oil-based liquid include glycerin fatty acid ester, liquid paraffin, and edible oil/fat (edible oil). An edible oil/fat is particularly suitable when the viscous hydrous substance is food.

Examples of the edible oil/fat that can be preferably used include soybean oil, rapeseed oil, olive oil, rice oil, corn oil, safflower oil, sesame oil, palm oil, castor oil, avocado oil, coconut oil, almond oil, walnut oil, hazelnut oil, and salad oil.

As mentioned above, the multilayer blow-formed empty container of the present invention has an inner layer 1 of a suitable density of polyethylene and having an inner surface 1a having excellent oil wettability. As a result, a slight amount of oil-based liquid is sufficient to form a uniform oil film 7 on the entire inner surface 1a, thereby exhibiting excellent lubricity and dischargeability to the viscous hydrous content.

There is no particular limitation on the hydrous contents to be contained in the container. However, since the container exhibits excellent lubricity and dischargeability imparted by formation of the oil film 7, particularly viscous hydrous contents can be contained. The examples include ketchup, aqueous glue, honey, various sauces, mayonnaise, mustard, dressing, jam, chocolate syrup, yogurt, and cosmetic liquids like milky lotion.

### Examples:

The effects of the present invention will be described below with reference to Experimental examples.

The methods for measuring characteristics, physical properties and the like in the Experimental examples, and resins or the like used for forming the blow-formed containers are described below.

### 1. Measurement on surface roughness of bottle inner surface

A test piece of 10 mm × 10 mm was cut out from the body of the bottle formed by the method mentioned below, so as to conduct a 3D shape measurement on the inner surface of the bottle body by using a microscope (VK-100 manufactured by KEYENCE CORPORATION). From the thus obtained data, the surface roughness of 500 µm × 500 µm area (ISO25178-2:2012) was calculated.

### 2. Measurement on 2D line roughness of bottle inner surface

A test piece of 20 mm × 20 mm was cut out from the body of the bottle formed by the method mentioned below, so as to measure the roughness by use of a surface roughness measuring instrument (SURFCOM2000SD3 manufactured by TOKYO SEIMITSU CO., LTD.) under the conditions of JIS'01, i.e., the length was 4 mm, the cutoff was 0.8 mm and the velocity was 0.3 mm/s.

### 3. Oil wettability measurement

A test piece of 20 mm × 20 mm was cut out from the body of the bottle formed by the method mentioned below. By using a solid-liquid interface analytic system (Dropmaster500 manufactured by Kyowa Interface Science Co., Ltd.), 0.8 µL of medium-chain triglyceride was dropped on the bottle inner surface side of the test piece so as to calculate the contact angle after 3 seconds. A smaller value indicates better wettability at the time of coating.

### 4. Measurement of oil droplet dispersion

A test piece of 30 mm × 20 mm was cut out from the body of the bottle formed by the method mentioned below. 0.8 µL of medium-chain triglyceride was dropped on the bottle inner surface side of the test piece, and the shape of the liquid droplets after 60 seconds was photographed by using a digital microscope (DVM5000 HD manufactured by Leica Microsystems GmbH) so as to measure the shape (length·breadth) of the droplet at three points. For the length, the median of the three points are recorded. For the length/breadth ratio, all of the three points are recorded.

### <Reference oil>

Medium-chain triglyceride (MCT) (surface tension is 28.8 mN/m, viscosity is 33.8 mPa·s, both of which are measured at 23°C; boiling point is 210°C or higher, and flash point is 242°C (reference value))

The surface tension of the liquid was measured at 23°C using a solid-liquid interface analysis system (DropMaster 700 manufactured by Kyowa Interface Science Co., Ltd.). The density of the liquid required for the surface tension measurement was measured at 23°C using a density/specific gravity meter (DA-130 manufactured by Kyoto Electronics Manufacturing Co., Ltd.). Further, the viscosity of the lubricating liquid was measured at 23°C using a tuning-fork vibration viscometer (SV-10 manufactured by A&D Company Limited).

### <Resin for outer layer formation)

### Low-density polyethylene-A (LDPE-A)

Density: 0.921 g/cm³
Lubricant: oleamide 300 ppm blended

### <Resin for intermediate layer formation>

### Low-density polyethylene-A (LDPE-A)

Density: 0.921 g/cm³
Lubricant: oleamide 300 ppm blended

### <Resin for barrier layer formation>

Blended material of ethylene·vinyl alcohol copolymer (EVOH) and polyolefin

### <Resin for inner layer formation>

1) Low-density polyethylene-A (LDPE-A)
   Density: 0.921 g/cm³
   Lubricant: oleamide 300 ppm blended
2) Low-density polyethylene-B (LDPE-B)
   Density: 0.922 g/cm³
   Lubricant: not blended

### <Experimental example 1>

A 40mm extruder-A was fed with a low-density polyethylene (LDPE-A) as a resin for outer layer formation. A 40mm extruder-B was fed with a blended material (resin for barrier layer formation) of an ethylene·vinyl alcohol copolymer (EVOH) and polyolefin. A 50mm extruder was fed with a low-density polyethylene (LDPE-A) as a resin for intermediate layer formation, and a 40mm extruder-C was fed with a low-density polyethylene (LDPE-B) as a resin for inner layer formation. A polymer-coated core was attached to the discharging side of the extruders from which a molten parison is to be discharged, thereby extruding the molten parison from the multilayer die head at 210°C. The parison was then subjected to direct blow formation at a mold temperature of 24°C to produce a bottle of 20 g comprising five layers of five kinds with a 400 g capacity. The layer structure of the bottle is as follows.

Outer layer / adhesive barrier layer / intermediate layer / adhesive barrier layer / inner layer
The thus prepared bottle was used to conduct a measurement on the surface roughness of the bottle inner surface, the 2D line roughness measurement of the bottle inner surface, oil wettability measurement and oil droplet dispersion measurement.

The results are indicated in Table 1.

### <Experimental example 2>

Abottle was prepared in the same manner as in Experimental example 1 except that a core without surface treatment was attached to the discharging side for discharging the molten parison, and the bottle was subjected to the respective evaluations. The results are indicated in Table 1.

### <Experimental example 3>

Abottle was prepared in the same manner as in Experimental example 1 except that the resin to be fed to the 40mm extruder-C for forming the inner layer was replaced by low-density polyethylene (LDPE-A), and the bottle was subjected to the respective evaluations. The results are indicated in Table 1.

### [Table 1]

**Table 1-1**

| | Inner layer material | Surface treatment | Surface roughness 500µm x 500µm | | | 2D line roughness |
|---|---|---|---|---|---|---|
| | | | Sz/µm | Sa/µm | Sq/µm | Ra/µm |
| Experimental example 1 | LDPE (no lubricant) | Polymer coat | 10.63 | 1.06 | 1.35 | 0.134 |
| Experimental example 2 | LDPE (no lubricant) | No treatment | 26.81 | 1.49 | 1.92 | 0.231 |
| Experimental example 3 | LDPE (with lubricant) | Polymer coat | 8.87 | 0.61 | 0.78 | 0.095 |

**Table 1-2**

| | Oil wettability | Oil droplet dispersion | | | | Oil coatability |
|---|---|---|---|---|---|---|
| | Contact angle after 3s / deg. | Length/mm | Length/breadth | | | Total evaluation |
| Experimental example 1 | <10 | 7.11 | 1.009 | 1.007 | 1.000 | ⊚ |
| Experimental example 2 | <10 | 7.10 | 1.017 | 1.062 | 1.013 | ○ |
| Experimental example 3 | 49.9 | 3.00 | 1.031 | 1.027 | 1.007 | × |

In Experimental examples 1 and 2, low-density polyethylene (LDPE-B) blended with no lubricant was used as the resin for inner layer formation (inner layer material) . Table 1 shows that the oil wettability is less than 10 degrees and the oil droplet length is 5 mm or more in both of these Experimental examples. This result demonstrates that the oil wettability in these Experimental examples is superior to that in Experimental example 3 where a lubricant is blended.

In Experimental examples 1 and 3, a surface-treated core, i.e., a core coated with a polymer was used. The measurement result on surface roughness shows that in these examples, both Sa and Sq are not more than 1.5 µm. This result indicates that the bottle inner surfaces were extremely smooth in comparison with that in Experimental example 2 using a core without such a surface treatment.

In Experimental example 1, low-density polyethylene blended with no lubricant (LDPE-B) was used as the inner layer material, and a polymer-coated core was used. In this example, the oil droplet dispersion (length/breadth ratio) was in a range of 1.000 to 1.010. This value is close to that of a true circle, indicating that the micro-level wettability is excellent and that the thus prepared bottle has excellent oil coatability.

### Explanations of Letters or Numerals:

- 1:: inner layer
- 1a:: inner surface
- 3:: outer layer
- 5:: intermediate layer
- 7:: oil film

## Claims

1. A blow-formed container having an inner surface formed of an olefin resin,
the inner surface has an oil droplet dispersion of not less than 5.0 mm where the oil droplet dispersion is defined as the length of an oil droplet of medium-chain triglyceride used as a reference oil retained at 23°C and dropped by 0.8 µL onto the inner surface.

2. The blow-formed container according to claim 1, wherein the oil droplet has a length/breadth ratio in a range of 1.000 to 1.010.

3. The blow-formed container according to claim 1, wherein the inner surface formed of the olefin resin includes a smooth surface having an arithmetic mean height Sa and a root mean square height Sq both of which are not more than 1.5 µm.

4. The blow-formed container according to claim 1, wherein an oil-based liquid is coated on the inner surface of the container prior to filling the container with a content.

5. The blow-formed container according to claim 4, wherein the oil film of the oil-based liquid formed on the inner surface has a thickness in a range of 0.5 to 30 g/m².

6. The blow-formed container according to claim 4, wherein the oil-based liquid is an edible oil.
